# EUROPÄISCHE PATENTANMELDUNG

(11) **EP 3 712 583 A1**
(43) Veröffentlichungstag der Anmeldung: **23.09.2020**
(21) Anmeldenummer: 20164549.6
(22) Anmeldetag: 20.03.2020
(51) Int. Cl.: G01L 3/14

(54) **DREHMOMENTSENSOR FÜR EINE ANTRIEBSEINHEIT, INSBESONDERE FÜR EIN FAHRRAD**

(30) Priorität: 21.03.2019 DE 102019203868
(71) Anmelder: Robert Bosch GmbH, 70442 Stuttgart (DE)
(72) Erfinder: Ossmann, Christoph, 72768 Reutlingen (DE); Braun, Sigmund, 72127 Kusterdingen (DE); Kaechele, Uwe, 72813 St. Johann-Wuertingen (DE); Schock, Wolfram, 72770 Ohmenhausen (DE)

(57) **Zusammenfassung**

Die vorliegende Erfindung betrifft einen Drehmomentsensor (1) einer Antriebseinheit (2), insbesondere für ein Fahrrad, der Drehmomentsensor (1) aufweisend eine Hülse (3), wobei die Hülse (3) in einer Axialrichtung einen Messabschnitt (5) und den Messabschnitt (5) einrahmende Verbindungsabschnitte (4) aufweist, wobei der Messabschnitt (5) zum Aufnehmen zumindest einer Sensoreinheit (6) zum Ermitteln eines an dem Messabschnitt (5) anliegenden Torsionsmoments ausgebildet ist, wobei die Verbindungsabschnitte (4) zum Aufnehmen oder Abgeben eines Drehmoments ausgebildet sind, und wobei die Hülse (3) zumindest einen Entkopplungsbereich (8) aufweist, der zwischen Messabschnitt (5) und Verbindungsabschnitt (4) angeordnet ist und in Axialrichtung elastisch federnd ausgebildet ist.

## Beschreibung

### Stand der Technik

Die vorliegende Erfindung betrifft einen Drehmomentsensor. Der Drehmomentsensor ist in einer Antriebseinheit verwendbar. Bei der Antriebseinheit handelt es sich besonders vorteilhaft um einen Antrieb eines Fahrrads.

Aus dem Stand der Technik sind Fahrräder bekannt, die einen Benutzer durch Aufbringen eines mittels Elektromotor erzeugten Drehmoments unterstützen. Das Drehmoment des Elektromotors soll dafür in Abhängigkeit eines von dem Benutzer über die Pedale aufgebrachten Drehmoments als zusätzliche Antriebsunterstützung fungieren. Dazu wird im Stand der Technik ein Drehmomentsensor verwendet, der ein von dem Benutzer generiertes Drehmoment erfasst.

### Offenbarung der Erfindung

Der erfindungsgemäße Drehmomentsensor basiert auf dem Prinzip einer Messung eines Torsionsmoments einer Hülse, auf die das von dem Fahrer aufgebrachte Drehmoment wirkt. Die Hülse kann dabei bevorzugt Teil eines Übertragungspfades des Drehmoments zwischen einem Drehmomenteingang und einem Drehmomentausgang sein. Durch die Verwendung axial federnder Entkopplungsbereiche ist ermöglicht, das Auftreten von mechanischen Störrspannungen zu reduzieren oder zu vermeiden. Dabei ist gleichzeitig sichergestellt, dass eine steife Drehmomentübertragung in Tangentialrichtung bzw. Umfangsrichtung erfolgt. Somit kann eine zuverlässige Ermittlung des an der Hülse anliegenden Drehmoments erfolgen. Insbesondere ist an den Entkopplungsstellen außerdem der magnetische Widerstand erhöht, wodurch störende externe Magnetfelder nicht oder nur vermindert zu dem Messabschnitt gelangen können. Dies ist vorteilhaft, wenn die Drehmomentermittlung über magnetisch arbeitende Sensoreinheiten erfolgt.

Der Drehmomentsensor ist für eine Antriebseinheit vorgesehen, die insbesondere eine Antriebseinheit für ein Fahrrad ist. Der Drehmomentsensor weist eine Hülse auf, auf die ein zu messendes Drehmoment aufbringbar ist. Die Hülse ist vorteilhafterweise an einer Stelle des Kraftflusses der Antriebseinheit anordenbar, die zwischen einem Eingang, an dem ein Benutzer ein Drehmoment einbringt, und einen Ausgang, an dem ein Ausgeben einer Antriebsleistung erfolgt, liegt. Die Hülse ist in einer Axialrichtung in verschiedene Abschnitte unterteilt und weist einen Messabschnitt und den Messabschnitt einrahmende Verbindungsabschnitte auf. Der Messabschnitt ist zum Aufnehmen zumindest einer Sensoreinheit zum Ermitteln eines an dem Messabschnitt anliegenden Torsionsmoments ausgebildet. Die Verbindungsabschnitte sind zum Aufnehmen oder Abgeben eines Drehmoments ausgebildet und somit mit anderen Komponenten außerhalb des Drehmomentsensors verbindbar. Besonders vorteilhaft sind die Verbindungsabschnitte außerdem zum Lagern der Hülse, insbesondere mittels Gleitlager oder Wälzlager, ausgebildet. Somit kann über einen der Verbindungsabschnitte ein Drehmoment auf die Hülse übertragen werden, wobei dieses Drehmoment zu einer Torsion der Hülse führt. Diese Torsion kann mittels der Sensoreinheit erfasst werden, um dadurch das angelegte Drehmoment zu bestimmen.

Die Hülse weist zumindest einen Entkopplungsbereich auf. Der Entkopplungsbereich ist in Axialrichtung zwischen dem Messabschnitt und dem Verbindungsabschnitt vorhanden. Dabei ist bevorzugt zumindest ein Entkopplungsbereich zwischen einem Verbindungsabschnitt und dem Messabschnitt vorgesehen, oder es sind zwei Entkopplungsbereiche vorhanden, sodass zwischen jedem Verbindungsabschnitt und dem Messabschnitt ein Entkopplungsbereich liegt. Der Entkopplungsbereich ist in Axialrichtung elastisch federnd ausgebildet ist. Somit ist die Entkopplung von Verbindungsabschnitt und Messabschnitt erreicht. Das Auftreten von mechanischen Störrspannungen, insbesondere in Axialrichtung, ist verhindert oder zumindest reduziert. Besonders vorteilhaft lassen sich durch zwei vorhandene Entkopplungsbereiche außerdem Achsversätze zwischen Lagerungsstellen ausgleichen, wenn die Hülse an den Verbindungsabschnitten gelagert ist. Dadurch werden unerwünschte Querkräfte verringert oder vermieden.

Die Unteransprüche zeigen bevorzugte Weiterbildungen der Erfindung.

Bevorzugt ist vorgesehen, dass der Entkopplungsbereich mehrere, sich in Umfangsrichtung der Hülse erstreckende Schlitze aufweist. Diese Schlitze sind derart angeordnet, dass sich in Axialrichtung biegeweiche Bereiche an dem Entkopplungsbereich ergeben. Diese biegeweichen Bereiche sorgen für die Federwirkung, wodurch parasitäre, kleine Bewegungen in Axialrichtungen von dem Messabschnitt entkoppelt sind. Um die biegeweichen Bereiche zu erhalten ist vorteilhaft vorgesehen, dass jeweils zumindest zwei Schlitze in Axialrichtung und in Umfangsrichtung benachbart angeordnet sind. Somit umfasst der Entkopplungsbereich bevorzugt zwei in Umfangsrichtung umlaufende Reihen von mehreren Schlitzen.

Im Rahmen dieser Offenbarung ist unter benachbarten Schlitzen zu verstehen, dass diese unmittelbar benachbart angeordnet sind. Dies bedeutet, dass kein weiterer Schlitz zwischen zwei benachbarten Schlitzen liegt. Benachbarte Schlitze sind besonders vorteilhaft stets parallel zueinander orientiert.

Besonders bevorzugt verbleibt zwischen zwei in Umfangsrichtung benachbarten und an derselben Stelle in Axialrichtung angeordnet Schlitzen ein Ankerbereich. Der Ankerbereich ist somit der in Umfangsrichtung zwischen zwei benachbarten Schlitzen liegende Bereich der Hülse. Ausgehend von diesem Ankerbereich erstrecken sich somit biegeweiche Arme zwischen den in Axialrichtung benachbarten Schlitzen. Die in Axialrichtung benachbarten Schlitze sind insbesondere in Umfangsrichtung versetzt, sodass ein Ankerbereich nicht durch den gesamten Entkopplungsbereich verlaufen kann.

Eine Breite der Schlitze, die in Axialrichtung gemessen wird, entspricht bevorzugt maximal dem Doppelten der Länge des Ankerbereichs, die in Umfangsrichtung gemessen wird. Dadurch ist erreicht, dass jeder Ankerbereich torsionssteif ausgebildet ist. Dies ermöglicht ein Übertragen eines Torsionsmoments an den Messabschnitt, wobei eine durch den Entkopplungsbereich bedingte Verfälschung des an dem Messabschnitt erfassten Drehmoments minimiert oder vermieden ist.

Weiterhin ist vorteilhaft vorgesehen, dass jeder Schlitz auf zumindest einer Seite in Axialrichtung mit zumindest zwei weiteren Schlitzen benachbart ist. Dadurch ist ein Überlappen jedes Schlitzes mit zwei weiteren Schlitzen erreicht, wobei die beiden weiteren Schlitze auf derselben Seite in Axialrichtung angeordnet sind. Somit sind Ankerbereiche bevorzugt durch biegeweiche Arme, die entlang der Umfangsrichtung verlaufen, verbunden. Dadurch lässt sich vorteilhaftweise besagte Federwirkung erreichen.

Besonders vorteilhaft beträgt eine Überlappungsabmessung zwischen zwei in Axialrichtung benachbarten Schlitzen maximal das Doppelte eines Abstands in Axialrichtung zwischen den in Axialrichtung benachbarten Schlitzen. Die Überlappungsabmessung gibt dabei diejenige Länge an, über die zwei Schlitze in Axialrichtung benachbart verlaufen. Insbesondere stellt die Überlappungsabmessung eine Länge der zuvor beschriebenen biegeweichen Armbereiche dar. Dar Abstand in Axialrichtung zwischen den Schlitzen stellt eine Breite der Armbereiche dar. Das zuvor angegebene Verhältnis führt in vorteilhafterweise zu der Biegeweichheit der Armbereiche in Axialrichtung. Dadurch die erreicht, dass der Entkopplungsbereich axial federnd ausgestaltet ist.

Bevorzugt ist eine Erstreckungsabmessung jedes der Schlitze in Umfangsrichtung identisch. Somit weisen alle Schlitze bevorzugt eine identische Abmessung in Umfangsrichtung auf. Besonders vorteilhaft sind die Schlitze in Umfangsrichtung gleichmäßig verteilt. Besonders vorteilhaft ist außerdem die Breite der Schlitze in Axialrichtung für alle Schlitze identisch. Somit ist eine Fertigung der Hülse vereinfacht.

Die Erfindung betrifft außerdem eine Antriebseinheit. Die Antriebseinheit ist insbesondere zum Antreiben eines Fahrrads vorgesehen. Die Antriebseinheit weist eine Antriebswelle auf, die zur Aufnahme eines durch einen Benutzer aufgebrachtes Drehmoment ausgebildet ist. Der Benutzer kann das Drehmoment beispielsweise über Tretkurbeln aufbringen. Zusätzlich weist die Antriebseinheit eine elektrische Maschine auf, wobei vorgesehen ist, dass eine Antriebsleistung, die von der Antriebseinheit abgegeben wird, gleichzeitig durch den Benutzer und die elektrische Maschine aufgebracht wird. Dazu sind ein Drehmomentsensor wie oben beschrieben und eine Steuereinheit vorhanden. Der Drehmomentsensor dient zum Erfassen des von dem Benutzer über die Antriebswelle aufgebrachten Drehmoments. Dazu ist die Hülse des Drehmomentsensors bevorzugt mit der Antriebswelle gekoppelt. Die Steuereinheit ist ausgebildet, die elektrische Maschine basierend auf dem von dem Drehmomentsensor erfassten Drehmoment anzusteuern. Dadurch kann die elektrische Maschine die Antriebsleistung des Benutzers unterstützen. Die Antriebseinheit ist außerdem ausgebildet, das von dem Benutzer aufgebrachte Drehmoment und ein von der elektrischen Maschine erzeugtes Drehmoment über einen gemeinsamen Abtrieb auszugeben. Bei dem Abtrieb kann es sich bevorzugt um ein Kettenblatt handeln, über das ein Kettentrieb zum Antreiben des Fahrrads antreibbar ist.

Besonders vorteilhaft weist die Hülse zwei Verbindungsabschnitte auf. Dabei ist vorgesehen, dass einer der Verbindungsabschnitte mit der Antriebswelle und ein anderer der Verbindungsabschnitte mit dem Abtrieb jeweils zur Drehmomentübertragung verbunden ist. Dadurch verläuft das Drehmoment, das der Benutzer auf die Antriebswelle aufbringt, durch die Hülse, bevor das Drehmoment über den Abtrieb ausgegeben werden kann. Die Hülse erfährt dabei eine Torsion, die zum Messen des Drehmoments, das der Benutzer aufgebracht hat, verwendet werden kann. Durch den Entkopplungsbereich kann diese Messung, die insbesondere mittels magnetisch arbeitender Sensoreinheiten durchgeführt wird, zuverlässig erfolgen, da störende mechanische Spannungen in Axialrichtung und/oder störende magnetische Einflüsse an dem Messabschnitt verringert werden.

Die Hülse ist bevorzugt an jedem Verbindungsabschnitt über ein Lager gelagert. Besonders vorteilhaft umschließt die Hülse die Antriebswelle und ist an den Verbindungsabschnitten auf der Antriebswelle gelagert. Dadurch ist vorteilhaft möglich, die Einflüsse der Lagerung durch den Entkopplungsbereich von dem Messabschnitt zu entkoppeln. Durch die Anordnung der Hülse auf der Antriebswelle ist ein platzsparender Aufbau realisiert.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht einer Antriebseinheit gemäß einem Ausführungsbeispiel der Erfindung,
- Figur 2: eine schematische Ansicht eines Teilbereichs der Antriebseinheit gemäße dem Ausführungsbeispiel der Erfindung,
- Figur 3: eine schematische Ansicht einer Hülse eines Drehmomentsensors der Antriebseinheit gemäß dem Ausführungsbeispiel der Erfindung, und
- Figur 4: eine schematische Detailansicht der Hülse des Drehmomentsensors der Antriebseinheit gemäß dem Ausführungsbeispiel der Erfindung.

### Ausführungsform der Erfindung

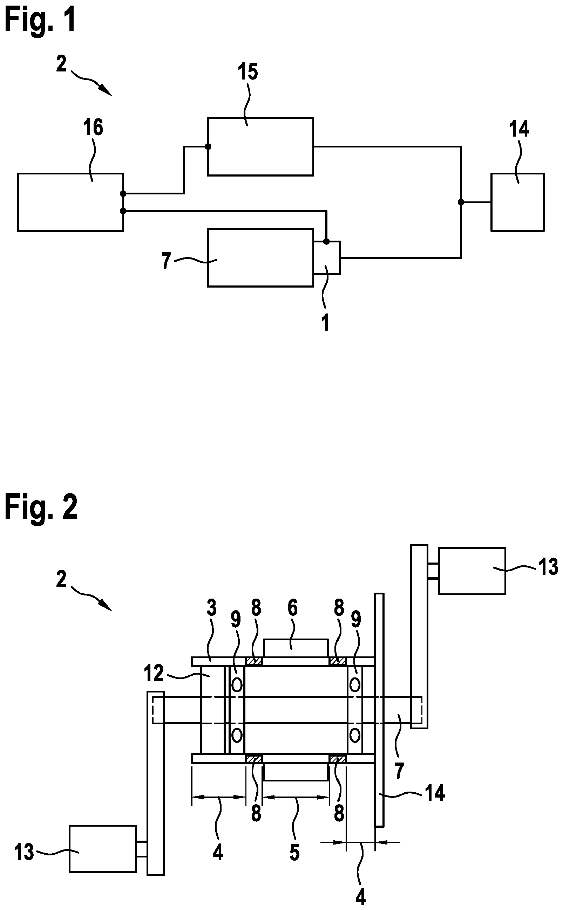

Figur 1 zeigt schematisch eine Antriebseinheit 2 gemäß einem Ausführungsbeispiel der Erfindung. Die Antriebseinheit 2 dient zum Antreiben eines Fahrrads. Daher ist eine Antriebswelle 7 vorgesehen, auf die ein Benutzer des Fahrrads ein Drehmoment aufbringen kann. Dieses Drehmoment wird von einem Drehmomentsensor 1 erfasst. Eine Steuereinheit 16 dient zum Ansteuern einer elektrischen Maschine 15 basierend auf diesem Drehmoment, das von dem Drehmomentsensor 1 erfasst wurde. Das Drehmoment, das der Benutzer auf die Antriebswelle 7 aufgebracht hat, und ein von der elektrischen Maschine ausgegebenes Drehmoment, werden über einen gemeinsamen Abtrieb 14 aus der Antriebseinheit 2 ausgegeben, um das Fahrrad anzutreiben. Der Drehmomentsensor 1 ermöglicht ein genaues und zuverlässiges Erfassen des Drehmoments. Dadurch ist ein optimales Ansteuerten der elektrischen Maschine 15 ermöglicht.

Figur 2 zeigt schematisch einen Teilbereich der Antriebseinheit 2 gemäß dem Ausführungsbeispiel der Erfindung. Dabei ist gezeigt, dass die Antriebswelle 7 mit Tretkurbeln 13 verbunden ist, über die der Benutzer ein Drehmoment auf die Antriebswelle 7 aufbringen kann. Die Antriebswelle 7 ist, insbesondere über einen Freilauf 12, mit dem Drehmomentsensor 1 gekoppelt.

Der Drehmomentsensor 1 weist eine Hülse 3 auf. Die Hülse 3 ist unterteilt in einen Messabschnitt 5 und zwei den Messabschnitt 5 rahmende Verbindungsabschnitte 4. Dabei ist vorgesehen, dass zwischen dem Messabschnitt 5 und jedem Verbindungsabschnitt 4 ein Entkopplungsbereich 8 angeordnet ist. Es ist vorgesehen, dass an dem Messabschnitt 5 eine Drehmomentmessung derart erfolgt, dass eine Sensoreinheit 6 ein Torsionsmoment an dem Messabschnitt 5 erfasst. Dies erfolgt insbesondere durch magnetisch arbeitende Sensoreinheiten 6. An den Verbindungsbereichen 4 ist die Hülse 3 über Lager 9 auf der Antriebswelle 7 gelagert. Außerdem ist an den Verbindungsbereichen 4 die Einkopplung und Auskopplung des von dem Benutzer aufgebrachten Drehmoments vorgesehen. So ist an einem der Verbindungsbereiche 4 der Freilauf 12 zum Koppeln mit der Antriebswelle 7 vorgesehen, wobei an dem anderen der Verbindungsbereiche 4 der Abtrieb 14 angebracht ist. Der Abtrieb 14 ist insbesondere ein Kettenblatt, mit dem ein Kettentrieb des Fahrrads antreibbar ist.

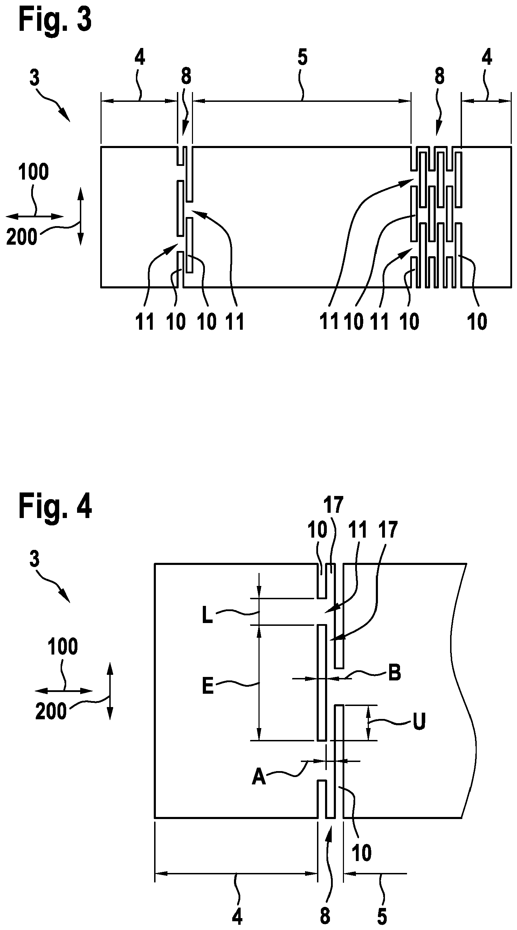

Durch die Entkopplungsbereiche 8 ist eine genaue und zuverlässige Messung des Drehmoments, das vom Benutzer aufgebracht wird, ermöglicht. Dies wird nachfolgend mit Bezug auf die Figuren 3 und 4, die schematisch die Hülse 3 zeigen, erläutert. Figur 3 zeigt die Hülse 3 mit zwei unterschiedlich ausgestalteten Entkopplungsbereichen 8. Die Hülse 3 kann alternativ auch beidseitig des Messabschnitts 5 die gleichen Entkopplungsbereiche 8 aufweisen. Figur 4 ist eine schematische Detailansicht eines der Entkopplungsbereiche 8.

Der Entkopplungsbereich 8 weist eine Vielzahl von Schlitzen 10 auf. Die Schlitze 10 weisen allesamt dieselbe Erstreckungsabmessung E auf in Umfangsrichtung 200 der Hülse 3 auf. Es ist vorgesehen, dass sich mehrere Schlitze 10 an derselben Position in Axialrichtung 100 der Hülse 3 befinden, sodass sich mehrere Schlitze 10 an derselben Position in Axialrichtung 100 um die Hülse 3 erstecken. Die Schlitze 10 sind dazu bevorzugt gleichmäßig um den Umfang der Hülse 3 verteilt, wobei ein Ankerabschnitt 11 zwischen zwei in Umfangsrichtung 200 benachbarter Schlitze 10 vorgesehen ist. Die Länge L der Ankerabschnitte 11 in Umfangsrichtung 200 ist daher bevorzugt identisch.

Es ist weiterhin vorgesehen, dass zumindest zwei Schlitze 10 in Axialrichtung 100 benachbart sind. Somit sind bevorzugt zwei in Umfangsrichtung 200 umlaufende Reihen von Schlitzen 10 vorhanden, die in Axialrichtung 100 benachbart sind. Dabei sind die Schlitze 10 dieser benachbarten Reihen versetzt angeordnet, sodass ein Ankerbereich 11 zwischen zwei in Umfangsrichtung 200 benachbarter Schlitze 10 nicht durch den gesamten Entkopplungsbereich 8 verläuft. Vielmehr sind die Ankerbereiche 11 durch Arme 17, die zwischen den Schlitzen 10 entlang der Umfangsrichtung 200 verlaufen, verbunden. Dies wird dadurch erreicht, dass eine Überlappungsabmessung U vorhanden ist, um die in Axialrichtung 100 benachbarte Schlitze 10 in Umfangsrichtung 200 überlappen. Bevorzugt sind sämtliche Überlappungsabmessungen U identisch.

Zwischen zwei in Axialrichtung 100 benachbarten Schlitzen 10 verbleibt ein Abstand A, der insbesondere für alle Schlitze 10 konstant ist. Somit ergeben sich bevorzugt die zuvor beschriebenen parallelen Reihen von Schlitzen 10. Besonders bevorzugt ist somit durch die Schlitze 10 eine regelmäßige Abfolge von Ankerbereichen 11 und die Ankerbereiche 11 verbindende Arme 17 vorhanden. Das Zusammenwirken von Armen 17 und Ankerbereichen 11 ermöglicht einerseits, dass der Entkopplungsbereich 8 in Axialrichtung 100 elastisch federn, andererseits in Umfangsrichtung 200 steif wirkt. Somit kann der Entkopplungsbereich 8 den Messabschnitt 5 von störenden axial wirkenden mechanischen Spannungen entkoppeln, gleichzeitig aber Torsionsspannungen ohne oder nahezu ohne Einfluss übertragen.

Um die Federwirkung des Entkopplungsbereichs 8 zu erreichen, sind die Arme 17 in Axialrichtung 100 biegeweich ausgeführt. Dies wird insbesondere dadurch erreicht, dass die Überlappungsabmessung U, was einer Abmessung der Arme 17 in Umfangsrichtung 200 entspricht, größer ist als das Doppelte des Abstands A, was einer Abmessung der Arme 17 in Axialrichtung 100 entspricht. Zusätzlich sind die Ankerbereiche 11 steif ausgeführt. Dies wird bevorzugt dadurch erreicht, dass die Breite B der Schlitze 10 kleiner ist als die Länge L des Ankerbereichs 11 in Umfangsrichtung 200. Somit wird durch entsprechende Anordnung und Ausgestaltung der Schlitze 10 eine Entkopplungswirkung lediglich in Axialrichtung 100 erreicht.

Wie in Figur 2 dargestellt, sind die Verbindungsbereiche 4 insbesondere zum Aufnehmen und Abgeben von Drehmoment und zum Lagern der Hülse 3 vorgesehen. Dabei auftretende parasitäre Bewegungen und/oder mechanische Spannungen in Axialrichtung 100 werden wirksam entkoppelt, da diese eine Biegung er Arme 17 verursachen und somit nicht unmittelbar auf den Messabschnitt 5 einwirken. Gleichzeitig ist das steife Übertragen von Torsionsspannungen, die für die Bestimmung des Drehmoments notwendig sind, ermöglicht.

Zusätzlich zu der mechanischen Entkopplung durch die Federwirkung, sind die Entkopplungsbereiche 8 auch solche Stellen, an denen ein magnetischer Widertand der Hülse 3 erhöht ist. Dies führt zu einer zusätzlichen geringeren Übertragung von störenden externen Magnetfeldern auf den Messabschnitt 5. Da an dem Messabschnitt 5 das Torsionsmoment mittels der magnetisch arbeitenden Sensoreinheit 6 erfasst wird, ist eine genaue Messung ermöglicht.

Schließlich wird durch das Einbringen der Schlitze 10 in die Hülse 3 eine Masse der Hülse 3 reduziert. Somit ist die Hülse 3 gewichtsoptimiert und weist bevorzugt eine geringe Trägheit auf.

In Figur 3 ist auf der rechten Seite ein Entkopplungsbereich 8 gezeigt, der sechs benachbarte Reihen von Schlitzen 10 aufweist. Durch eine derartige Anzahl von Schlitzen 10 ist, insbesondere dann wenn solche Entkopplungsbereiche 8 auf beiden Seiten des Messabschnitts 5 vorhanden sind, ein Ausgleich von Achsversätzen zwischen den Lagern 9 ermöglicht. Auf diese Weise können unerwünschte Querkräfte auf die Hülse 3, insbesondere auf den Messabschnitt 5, vermieden werden.

Durch die Entkopplungsbereiche 8 ist somit auf unterschiedliche Weise sichergestellt, dass ein Torsionsmoment unverfälscht auf dem Messabschnitt 5 erfasst werden kann. Dies ermöglicht eine exakte Bestimmung des von dem Benutzer aufgebrachten Drehmoments. Somit kann die elektrische Maschine 15 optimiert angesteuert werden.

## Patentansprüche

1. Drehmomentsensor (1) einer Antriebseinheit (2), insbesondere für ein Fahrrad, der Drehmomentsensor (1) aufweisend eine Hülse (3),
• wobei die Hülse (3) in einer Axialrichtung (100) einen Messabschnitt (5) und den Messabschnitt (5) einrahmende Verbindungsabschnitte (4) aufweist,
• wobei der Messabschnitt (5) zum Aufnehmen zumindest einer Sensoreinheit (6) zum Ermitteln eines an dem Messabschnitt (5) anliegenden Torsionsmoments ausgebildet ist,
• wobei die Verbindungsabschnitte (4) zum Aufnehmen oder Abgeben eines Drehmoments ausgebildet sind, und
• wobei die Hülse (3) zumindest einen Entkopplungsbereich (8) aufweist, der zwischen Messabschnitt (5) und Verbindungsabschnitt (4) angeordnet und in Axialrichtung (100) elastisch federnd ausgebildet ist.

2. Drehmomentsensor (1) nach Anspruch 1, **dadurch gekennzeichnet, dass** der Entkopplungsbereich (8) mehrere, sich in Umfangsrichtung (200) der Hülse (3) erstreckende Schlitze (10) aufweist, wobei jeweils zumindest zwei Schlitze (10) in Axialrichtung (100) und in Umfangsrichtung (200) benachbart angeordnet sind.

3. Drehmomentsensor (1) nach Anspruch 2, **dadurch gekennzeichnet, dass** zwischen zwei in Umfangsrichtung (200) benachbarten und an derselben Stelle in Axialrichtung (100) angeordnet Schlitzen (10) ein Ankerbereich (11) der Hülse (3) verbleibt.

4. Drehmomentsensor (1) nach Anspruch 3, **dadurch gekennzeichnet, dass** eine Breite (B) der Schlitze (10) in Axialrichtung (100) maximal dem Doppelten der Länge (L) des Ankerbereichs (11) in Umfangsrichtung (200) entspricht.

5. Drehmomentsensor (1) nach einem der Ansprüche 2 bis 4, **dadurch gekennzeichnet, dass** jeder Schlitz (10) auf zumindest einer Seite in Axialrichtung (100) mit zumindest zwei weiteren Schlitzen (10) benachbart ist.

6. Drehmomentsensor (1) nach Anspruch 5, **dadurch gekennzeichnet, dass** eine Überlappungsabmessung (U) zwischen zwei in Axialrichtung (100) benachbarten Schlitzen (10) maximal dem Doppelten eines Abstands (A) in Axialrichtung (100) zwischen den in Axialrichtung (100) benachbarten Schlitzen (10) entspricht.

7. Drehmomentsensor (1) nach einem der Ansprüche 2 bis 6, **dadurch gekennzeichnet, dass** eine Erstreckungsabmessung (E) jedes der Schlitze (10) in Umfangsrichtung (200) identisch ist.

8. Antriebseinheit (2), insbesondere für ein Fahrrad, aufweisend eine Antriebswelle (7) zur Aufnahme eines durch einen Benutzer aufgebrachten Drehmoments, einen Drehmomentsensor (1) nach einem der vorhergehenden Ansprüche zum Erfassen des von dem Benutzer über die Antriebswelle (7) aufgebrachten Drehmoments, eine elektrische Maschine (15), und eine Steuereinheit (16), wobei die Steuereinheit (16) ausgebildet ist, die elektrische Maschine (15) basierend auf dem von dem Drehmomentsensor (1) erfassten Drehmoment anzusteuern, um das von dem Benutzer aufgebrachte Drehmoment und ein von der elektrischen Maschine (15) erzeugtes Drehmoment über einen gemeinsamen Abtrieb (14) auszugeben.

9. Antriebseinheit (2) nach Anspruch 8, **dadurch gekennzeichnet, dass** die Hülse (3) zwei Verbindungsabschnitte (4) mit dem dazwischenliegenden Messabschnitt (5) aufweist, wobei einer der Verbindungsabschnitte (4) mit der Antriebswelle (7) und ein anderer der Verbindungsabschnitte (4) mit dem Abtrieb (14) jeweils zur Drehmomentübertragung verbunden ist.

10. Antriebseinheit (2) nach Anspruch 8 oder 9, **dadurch gekennzeichnet, dass** die Hülse (3) an jedem Verbindungsabschnitt (4) über ein Lager (9), insbesondere auf der Antriebswelle (7), gelagert ist.
